# EUROPÄISCHE PATENTSCHRIFT

(11) **EP 1 658 227 B1**
(45) Veröffentlichungstag und Bekanntmachung des Hinweises auf die Patenterteilung: **05.12.2007**
(21) Anmeldenummer: 04763615.4
(22) Anmeldetag: 29.07.2004
(51) Int. Cl.: B65D 33/01, B32B 37/00

(54) **FEUCHTIGKEITSABWEISENDES UND LUFTDURCHLÄSSIGES BEHÄLTNISS UND VERFAHREN ZU SEINER HERSTELLUNG**
MOISTURE-REPELLENT RECEPTACLE, AND METHOD FOR THE PRODUCTION THEREOF
CONTENANT HYDROFUGE ET PERMEABLE A L'AIR ET SON PROCEDE DE PRODUCTION

(30) Priorität: 30.07.2003 FR 0309413
(43) Veröffentlichungstag der Anmeldung: 24.05.2006
(73) Patentinhaber: NORDSON CORPORATION, Westlake, Ohio 44145-1119 (US)
(72) Erfinder: CHEVILLIARD, Philippe, F-69740 Genas (FR)
(74) Vertreter: Eisenführ, Speiser & Partner
(86) Internationale Anmeldenummer: PCT/EP2004/008519
(87) Internationale Veröffentlichungsnummer: WO 2005/012121

(56) Entgegenhaltungen:
- WO-A-02/42060
- GB-A- 1 462 941
- US-A- 2 593 328
- US-A- 4 672 684
- US-A- 5 988 881

## Beschreibung

Die Erfindung betrifft ein Behältnis, insbesondere einen Sack, zum Verpacken von Schüttgut wie Zement.

Die Erfindung betrifft auch eine Vorrichtung zur Herstellung von Behältnissen, insbesondere Säcken, zum Verpacken von Schüttgut wie Zement, mit einem Schneidwerkzeug zum Schneiden einer Trägerbahn in Abschnitte und einem Ausformungswerkzeug zur Ausformung eines Behältnisses aus jeweils einem der Abschnitte.

Die Erfindung betrifft auch ein Verfahren zur Herstellung von Behältnissen, insbesondere Säcken, zum Verpacken von Schüttgut wie Zement, in dem eine Trägerbahn in Abschnitte zerschnitten wird und jeder Abschnitt zu jeweils einer ein Behältnis im wesentlichen ausbildenden, mindestens einen Behältniswandung geformt wird.

Ferner betrifft die Erfindung ein Verfahren zum Befüllen von Behältnissen, insbesondere Säcken mit Schüttgut, in dem das Schüttgut, insbesondere Zement, in das offene Behältnis mittels eines Einfüllstutzens gefüllt wird und das Behältnis gegenüber dem Einfüllstutzen abgedichtet wird.

Zement und anderes Schüttgut wird herkömmlicherweise in Papiersäcken verkauft und transportiert. Dabei ist der Zement in dem Papiersack wie in einem Paket verpackt. Der Papiersack wird aus einem Papierbahnabschnitt gewonnen. Die Papierwandung des Papiersackes ist geringfügig luftdurchlässig und auch feuchtigkeitsdurchlässig. Nachteilig bei den bekannten Zementsäcken ist, dass während des Füllens die sich im Bodenbereich der Zementsäcke ansammelnde Luft nicht hinreichend schnell und vollständig aus dem Zementsack entweichen kann, so dass unerwünschte Lufträume im Zementsack entstehen. Ferner kann insbesondere während der Lagerung des Zementsackes Feuchtigkeit von außen durch das Papier in den Zementsack eindringen. Da Zementsäcke, insbesondere beim Bau von Häusern, im Freien verwendet werden, wären sie dort der Witterung häufig schutzlos ausgesetzt. Es ist also notwendig, die Zementsäcke in extra für sie angelegten Schutzräumen, unter Unterständen oder in abgeschlossenen Containern auf der Baustelle zu lagern.

In Vorrichtungen zur Herstellung von Zementsäcken aus Papier, die Teil von komplexen Fertigungseinrichtungen sein können, wird die Papierbahn in Abschnitte zerschnitten, aus denen jeweils ein Papiersack gefaltet wird. In die noch offenen, gefalteten Papiersäcke wird der Zement eingefüllt. Dabei wird . Luft zwischen Papiersack und Zement eingeschlossen, die nicht schnell genug entweicht, um eine dichte Befüllung zu ermöglichen. Die nur lockere Zementsackbefüllung ist eine Nachteil, da sie unnötig viel Volumen einnimmt.

Ein Behältnis, eine Vorrichtung und ein Verfahren gemäß Oberbegriffen der Ansprüche 1, 7, 11, 13 sind aus der US-A-5 988 881 bekannt.

Es ist Aufgabe der vorliegenden Erfindung, ein kostengünstiges zum Verpacken von Schüttgut wie Zement geeignetes Behältnis zur Verfügung zu stellen.

Gemäß eines zweiten Aspektes ist es auch Aufgabe der vorliegenden Erfindung, eine Vorrichtung zur kostengünstigen Herstellung von zum Verpacken von Schüttgut wie Zement geeigneten Behältnissen zur Verfügung zu stellen.

Gemäß eines dritten Aspektes ist es ferner Aufgabe der vorliegenden Erfindung, ein kostengünstiges Verfahren zur Herstellung von zum Verpacken von Schüttgut wie Zement geeigneten Behältnissen zur Verfügung zu stellen.

Gemäß eines vierten Aspektes ist es weiterhin Aufgabe der Erfindung, ein Verfahren zum dichten Befüllen von Behältnissen, insbesondere Säcken, mit Schüttgut wie Zement zur Verfügung zu stellen.

Die Aufgabe wird in ihrem ersten Aspekt durch ein eingangs genanntes Behältnis gelöst, mit mindestens einer das Behältnis im wesentlichen ausbildenden, gasdurchlässigen und feuchtigkeitsabweisenden Behältniswandung, die eine Trägerlage und eine Öffnungen aufweisende Kunststofflage aufweist.

Beide Eigenschaften der Behältniswandung, die Gasdurchlässigkeit und die feuchtigkeitsabweisende Eigenschaft, werden erfindungsgemäß durch die wenigstens doppellagige Ausbildung der Behältniswandung mit einer Trägerlage und einer Öffnungen aufweisenden Kunststofflage zur Verfügung gestellt.

Die feuchtigkeitsabweisende Eigenschaft der Behältniswandung, die insbesondere für von außen auf das Behältnis einwirkende Feuchtigkeit abweisend ist, schützt das im Behältnis verpackte Schüttgut gegen Durchfeuchtung.

Die Kunststofflage weist Öffnungen auf. Die Öffnungen der Kunststofflage sind jedoch so klein, dass zwar Gas, vorzugsweise von innen nach außen, durch die Kunststofflage strömen kann, jedoch von außen nach innen keine Feuchtigkeit hindurchdringt. Feuchtigkeit liegt in Tropfenform in der Umgebungsluft vor. Die Tropfengröße wird auch durch die Kohäsionskräfte der sie bildenden Flüssigkeit bestimmt. Damit Feuchtigkeitstropfen nicht durch die Öffnungen der Kunststofflage dringen können, sollten die Öffnungen eine bestimmte Öffnungshöchstgröße nicht überschreiten. Die Öffnungshöchstgröße sollte daher unterhalb der Tropfengröße liegen. Die Kunststofflage kann außen und innen auf der Trägerlage angeordnet sein. Wenn die Trägerlage innen auf die Kunststofflage aufgebracht ist, schützt die Kunststofflage auch die Trägerlage vor Durchfeuchtung von außen. Wenn die Trägerlage außen auf die Kunststofflage aufgebracht ist, also keinen direkten Kontakt mit dem Schüttgut hat, kann die Trägerlage zwar von außen durchfeuchten aber das Schüttgut bleibt durch die Kunststofflage dennoch geschützt und trocken. Die Trägerlage kann also innen oder außen auf der Kunststofflage angeordnet sein und sie braucht auch nicht unbedingt selber feuchtigkeitsabweisend zu sein, damit die Behältniswandung insgesamt feuchtigkeitsabweisend ist.

Die Gasdurchlässigkeit der Behältniswandung ermöglicht ein Entweichen von im Behältnis eingeschlossenem Gas durch die Behältniswandung hindurch und damit eine dichtere Packung des Schüttgutes in dem Behältnis.

Die Trägerlage ist gasdurchlässig. Dadurch wird ermöglicht, dass Gas, insbesondere Luft, aus dem Behältnis und durch die Trägerlage entweichen kann. Die Trägerlage kann beispielsweise eine Papierlage oder eine textile Gewebelage sein. Insbesondere die Papierlage sollte möglichst dünn sein, damit sie gasdurchlässig ist. Es ist auch denkbar, die Papierlage zu perforieren. Das Gas kann auch durch die Öffnungen der Kunststofflage entweichen, die vorzugsweise außen auf der Trägerlage angeordnet ist, aber auch innen auf der Trägerlage angeordnet sein kann. Die Behältniswandung ist somit insgesamt gasdurchlässig. In dem Behältnis unerwünschtes Gas kann nach außen entweichen.

Durch die doppellagige Ausbildung der Behältniswandung wird, trotz ihrer Luftdurchlässigkeit, einen hohe Reißfestigkeit erzielt. Die dünne Ausbildung oder Perforation der Trägerlage setzt zwar deren Reißfestigkeit herab, sie ist aber für deren Gasdurchlässigkeit erforderlich. Diese widerstrebenden Forderungen an die Dicke der Trägerlage werden hier durch das Aufbringen einer nicht geschlossenen, aber die Reißfestigkeit dennoch erhöhenden Kunststofflage erfüllt.

Grundsätzlich ist es auch denkbar, dass mehrere Trägerlagen zur Ausbildung des Behältnisses mit zwischen ihnen angeordneten Kunststofflagen übereinander angeordnet sind. Dadurch wird eine besonders reißfeste Behältniswandung zur Verfügung gestellt.

In einer besonders bevorzugten Ausführungsform der Erfindung ist die Klebstofflage eine Heißschmelzklebstofflage. Der Heißschmelzklebstofflage ist z. B. in Fertigungseinrichtungen in der für die Erfindung erforderlichen, Öffnungen aufweisenden, Form auf Trägerlagen, insbesondere Papierlagen, auftragbar. Die Öffnungen aufweisende Heißschmelzklebstofflage kann porös sein, es ist sogar denkbar, dass der Heißschmelzklebstoff in dicht voneinander beabstandeten nebeneinander, vorzugsweise parallel, angeordneten Streifen oder in Form eines Netzes auf die Trägerlage aufgebracht ist. Heißschmelzklebstoff ist relativ billig und in unterschiedlichen Arten kommerziell erhältlich. Der Heißschmelzklebstoff ermöglicht es, unterschiedlichen Anforderungen, z. B. hinsichtlich Reißfestigkeit und Gewicht, angepasste Behältnisse kostengünstig zur Verfügung zu stellen.

In ihrem zweiten Aspekt wird die Aufgabe der Erfindung auch durch eine eingangs genannte Vorrichtung gelöst, die mindestens ein Beschichtungswerkzeug zum Auftragen von Kunststoff auf eine Trägerbahn, und die mindestens ein Transportwerkzeug zum Transport der Trägerbahn vorbei an dem mindestens einen Beschichtungswerkzeug aufweist.

Die erfindungsgemäße Vorrichtung dient insbesondere zur Herstellung der oben genanten Behältnisse, insbesondere Säcke. Die Vorrichtung weist mindestens ein Beschichtungswerkzeug auf, das dazu bestimmt ist, eine nicht geschlossene Kunststoffschicht auf die Trägerbahn aufzutragen. Das mindestens eine Transportwerkzeug dient zum Transport der Trägerbahn vorbei an dem Beschichtungswerkzeug. Darüber hinaus können eine Vielzahl von Umlenkwalzen und Transportwalzen vorgesehen sein, die die Trägerbahn, insbesondere im Bereich des Beschichtungswerkzeugs, richtig positionieren. Die erfindungsgemäße Vorrichtung ist kostengünstig und schnell aufbaubar, weil nur die zusätzliche Montage des wenigstens einen Transportmittels und des wenigstens einen Beschichtungswerkzeugs notwendig ist. Beide Bauteile sind grundsätzlich z.B. aus der EP 0 568 812 A1 bekannt.

In einer bevorzugten Ausführungsform der Vorrichtung weist das Beschichtungswerkzeug einen Fluidapplikator mit einer trägerbahnseitig angeordneten Schlitzdüse auf. Vorzugsweise ist die Schlitzdüse in Schlitzdüsenabschnitte unterteilt, die durch einzelne oder Gruppen von Schlitzdüsenabschnitten zugeordneten Pumpen mit flüssigem Heißschmelzklebstoff versorgbar sind. Die Pumpen sind mittels einer Steuereinrichtung steuerbar. Das Beschichtungswerkzeug ermöglicht einen Auftrag einer streifenförmigen Kunststofflage auf die Trägerlage. Dabei wird die Trägerlage an dem Fluidapplikator ständig vorbeigeführt und aus jedem Schlitzdüsenabschnitt kann ein Heißschmelzklebstoffstreifen in der Abschnittsbreite auf die Trägerbahn aufgetragen werden. Wenn der Heißschmelzklebstofffluss zu jedem Schlitzdüsenabschnitt groß ist, so wird viel Klebstoff pro Fläche auf die Trägerbahn aufgetragen und die Klebstoffschicht wird dicker. Durch die Vorrichtung können beschichtete Trägerbahnen für die Behältnisse mit hoher Geschwindigkeit produziert werden.

In einer weiteren günstigen Ausführungsform der Vorrichtung weist das Beschichtungswerkzeug mindestens ein Streuwerkzeug zum Aufstreuen von Klebstoffpulver auf die Trägerbahn auf und in Transportrichtung der Trägerbahn nach dem mindestens einen Streuwerkzeug mindestens ein Heizelement zum Nachheizen und zum Schmelzen des Klebstoffpulvers und zum Ausbilden einer Öffnungen aufweisenden Klebstoffschicht. Der pulverförmige Auftrag ermöglicht, bei richtiger Dosierung, die Ausbildung einer porösen Klebstoffschicht auf dem Trägermaterial. Günstigenfalls kann die Trägerbahn vorgeheizt werden, um so eine gute Haftung des Klebstoffpulvers auf ihr zu befördern. Diese Vorrichtung ermöglicht die Herstellung von besonders sicher feuchtigkeitsabweisenden Kunststofflagen.

Die beschichtete Trägerbahn ist mit Hilfe des Schneidwerkzeugs in Abschnitte schneidbar, die jeweils mit Hilfe des Ausformungswerkzeugs zu einem Behälter, insbesondere zu einem Sack, formbar sind.

Zur Ausbildung besonders fester Zementsäcke kann die Zementsackwandung mehrlagig ausgebildet werden. Feste Zementsäcke können bei einer großen aufzunehmenden Zementmenge notwendig werden. In einer weiteren Ausführungsform der Vorrichtung sind deshalb in Transportrichtung nach dem mindestens einen Beschichtungswerkzeug Laminierrollen zum Aufbringen einer weiteren Trägerbahn auf die Klebstoffseite der beschichteten Trägerbahn angeordnet. Die zweite Trägerbahn kann vor dem Zusammenführen mit der beschichteten Trägerbahn vorgeheizt werden. Des weiteren kann es für eine feste Verklebung der beiden Trägerbahnen zielführend sein, die zusammengeführten Trägerbahnen nachzuheizen.

Die Aufgabe der Erfindung wird in ihrem dritten Aspekt ferner durch ein eingangs genanntes Verfahren gelöst, indem eine Trägerbahn mit einer Öffnungen aufweisenden Klebstofflage beschichtet wird, um eine luftdurchlässige und feuchtigkeitsabweisende Behältniswandung auszubilden. Das erfindungsgemäße Verfahren ist insbesondere durch die oben beschriebene Vorrichtung durchführbar. Dabei wird die Öffnungen aufweisende Klebstofflage insbesondere mittels der Schlitzdüse eines Fluidapplikators auf die Trägerbahn aufgebracht. Vorzugsweise wird kostengünstiger Heißschmelzklebstoff auf die Trägerbahn aufgebracht.

In ihrem vierten Aspekt wird die Aufgabe der Erfindung weiterhin durch ein eingangs genanntes Verfahren erfüllt, indem in dem Behältnis eingeschlossene Luft während des Füllens durch die mindestens eine gasdurchlässige und feuchtigkeitsabweisende Behältniswandung entweicht. Das mittels eines Einfüllstutzens in das Behältnis eingefüllte Schüttgut schließt in der Regel Luft ein. Diese eingeschlossene Luft kann schon während des Füllens des Behältnisses durch seine Wandungen entweichen. Das erfindungsgemäße Verfahren ermöglicht damit eine dichte Verpackung des Schüttguts in dem Behältnis.

Die Erfindung wird anhand von bevorzugten Ausführungsbeispielen beschrieben. Dabei zeigt:
- Fig. 1: einen erfindungsgemäßen Zementsack,
- Fig. 2: einen Querschnitt durch den Zementsack gemäß Figur 1 entlang der Ebene II-II,
- Fig.3: eine schematische Ansicht einer erfindungsgemäßen Vorrichtung zur Herstellung von Zementsäcken gemäß Figur 1,
- Fig. 4: ein Beschichtungswerkzeug in einer Vorrichtung gemäß Figur 3, und
- Fig.5: einen schematischen Schnitt durch eine Schlitzdüse entlang der Ebene V-V in Fig.4.

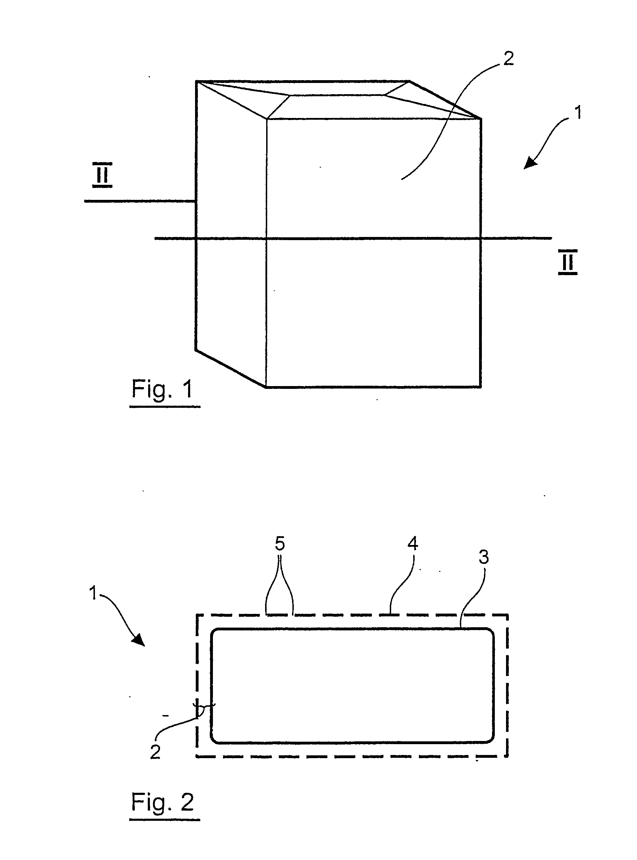

Der in Fig. 1 dargestellte Zementsack 1 ist ein mit Zement gefülltes quaderförmiges Behältnis mit einer gasdurchlässigen und feuchtigkeitsabweisenden Zementsackwandung 2. Die Zementsackwandung 2 umschließt den Zement packetartig und sie ist an ihrer Ober- und Unterseite gefaltet.

Die in Fig. 2 dargestellte Querschnittansicht entlang der Ebene II-II in Fig. 1 zeigt die doppellagige Ausbildung der Zementsackwandung 2 des Zementsacks 1. Eine innenseitig im Zementsack angeordnete Trägerlage 3 aus luftdurchlässigem Papier steht mit dem eingefüllten Zement in Berührung. Die Trägerlage 3 kann aber auch aus luftdurchlässigem, textilem Gewebe bestehen. Außenseitig ist auf die Papierlage 3 eine poröse Heißschmelzklebstofflage 4 aufgebracht.

Diese Heißschmelzklebstofflage 4 weist Öffnungen 5 auf und sie hat ein sehr geringes Gewicht von etwa 8 g/m²: Die Öffnungen 5 sind so dimensioniert, dass Feuchtigkeit nicht durch sie hindurch in die Papierlage 3 eindringen kann, sie aber trotzdem luftdurchlässig bleibt. Die so ausgebildete Zementsackwandung 2 ist feuchtigkeitsabweisend und luftdurchlässig.

Die in- Fig. 3 dargestellte schematische Ansicht einer Vorrichtung für Zementsäcke zeigt eine erste Rolle 6 mit einer abrollbaren, luftdurchlässigen Papierbahn 7. Die Papierbahn 7 wird über Umlenkwalzen oder Antriebswalzen 8 an einem Fluidapplikator 9 vorbeitransportiert. Der Fluidapplikator 9 ist stationär angeordnet und über einen Schlauch mit einer Zahnradpumpe 10 verbunden. Die Zahnradpumpe 10 versorgt den Fluidapplikator 9 aus einem Vorratsbehälter 11 mit flüssigem Heißschmelzklebstoff. Die auf die Papierbahn 7 aufgetragene Fluidmenge je Flächeneinheit kann durch Einstellung einer verringerten oder vergrößerten Drehzahl der Zahnradpumpe 10 gesteuert werden. Eine weitere Steuermöglichkeit ergibt sich durch die Einstellung der Transportgeschwindigkeit der Papierbahn 7.

Die Vorrichtung gemäß Fig. 3 ermöglicht einen Öffnungen aufweisenden Auftrag des Heißschmelzklebstoffes auf die Papierbahn 7. Die Papierbahn 7 wird mit einem ersten Heizelement 12 vorgeheizt. Der flüssige Heißschmelzklebstoff wird auf die vorgeheizte Papierbahn 7 durch den Fluidapplikator 9 aufgebracht. Dabei wird die pro Fläche aufgetragene Menge zu gewählt, dass eine Öffnungen aufweisende Heißschmelzklebstofflage 13 auf der Papierbahn 7 entsteht. Das Vorheizen befördert z.B. ein Verdampfen der Lösungsmittel des flüssigen Heißschmefzklebstoffes und ein langsameres Abbinden. Der Heißschmelzklebstoff kann so länger in die Papierbahn 7 eindringen und eine feste Verbindung mit ihr ausbilden. Die beschichtete Papierbahn wird dann durch ein zweites Heizelement 14 nachgeheizt, um den Heißschmelzklebstoff eine noch festere Verbindung mit der Papierbahn 7 ausbilden zu lassen. Die beschichtete Papierbahn wird über Umlenkrollen 8 einem Schneidewerkzeug 15 zugeführt, welches die beschichtete Papierbahn in gleich große Abschnitte 16 schneidet. Die Abschnitte 16 werden zu Zementsackwandungen 2 ausgeformt und mit Zement befüllt.

Der Zement wird über einen Einfüllstutzen (nicht eingezeichnet) in den Zementsack 1 eingefüllt. Der Zementsack wird dann geschlossen. Die beim Befüllen im Zementsack eingeschlossene Luft entweicht durch die luftdurchlässigen Zementsackwandungen 2.

Eine schematische Ansicht eines für den Auftrag des Heißschmelzklebstoffs geeigneten- Fluidapplikators 9 zeigt Fig. 4. Der Auftrag des Heißschmelzklebstoffs erfolgt über eine Schlitzdüse 17, die papierbahnseitig an dem Fluidapplikator 9 angeordnet ist. Fig. 4 zeigt den Fluidapplikator mit einem in Transportrichtung vor ihm angeordneten Heizelement. Die Papierbahn 7 wird an dem ersten Heizelement 12 vorbeitransportiert und dort erwärmt. In Transportrichtung nach dem ersten Heizelement 12 ist eine weitere Umlenkwalze 8a angeordnet, die auch Antriebswalze ist. Zwischen der weiteren Umlenkwalze 8a und dem Fluidapplikator 9 wird die Papierbahn 7 durch einen engen Spalt hindurchtransportiert. Die Schlitzdüse 17 -ermöglicht einen Auftrag des Heißschmelzklebstoffes auf die Papierbahn 7. Die Heißschmelzklebstofflage 13 ist luftdurchlässig. Ihre Öffnungen sind aber so klein und so weit voneinander beabstandet, dass von außen auf die Lage treffende Feuchtigkeit nicht durch sie in die Papierbahn 7 eindringen kann. Die mit der Heißschmelzklebstofflage 13 beschichtete Papierbahn 7 wird über Umlenkwalzen 8 weitertransportiert und wie bereits zu Fig. 3 beschrieben zu Zementsäcken weiterverarbeitet.

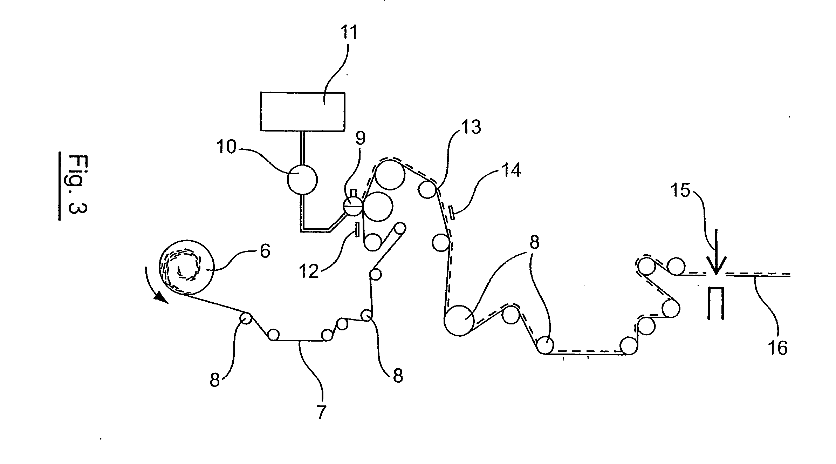

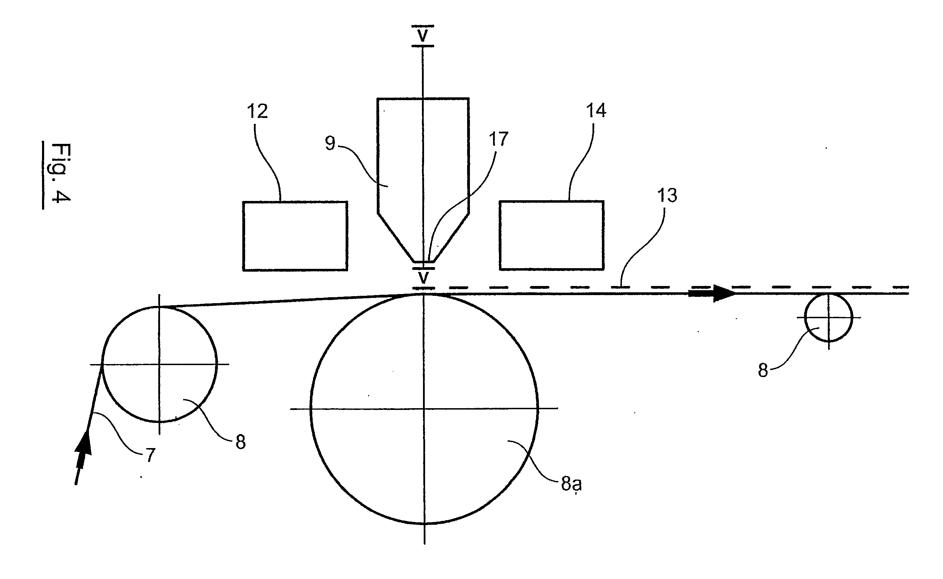

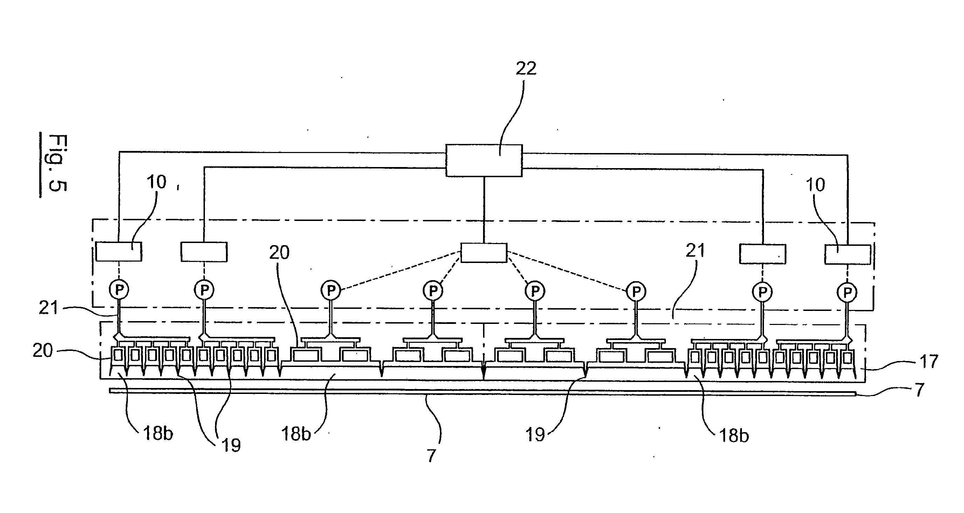

Fig. 5 zeigt einen schematischen Schnitt entlang der Ebene V-V in Fig. 4. Die Schlitzdüse 17 ist über der Papierbahn 7 angeordnet. Die Schlitzdüse 17 verjüngt sich senkrecht zur Zeichenebene zur papierbahnseitigen Kante hin. Die Schlitzdüse 17 weist entlang ihrer Längsrichtung voneinander durch Zwischenwände 19 getrennte Schlitzdüsenabschnitte 18a, 18b unterschiedlicher Länge auf. Die Schlitzdüsenabschnitte 18a, 18b sind nur entlang ihrer äußersten papierbahnseitigen Kante miteinander verbunden. Jeder der Schlitzdüsenabschnitte 18a, 18b ist über jeweils einen C-förmigen Kanal 20 an seinen in Schlitzdüsenlängsrichtung äußeren Enden mit flüssigem Heißschmelzklebstoff versorgbar. Einige benachbarte C-förmige Kanäle 20 sind miteinander durch gemeinsame Kanäle 21 versorgbar. Jeder der gemeinsamen Kanäle 21 weist eine zentral über eine Steuereinrichtung 22 steuerbare Zahnradpumpe 10 auf. Die Steuereinrichtung 22 ermöglicht es, die einzelnen Schlitzdüsenabschnitte 18a, 18b durch die zugehörige Zahnradpumpe 10 mit Heißschmelzklebstoff steuerbar zu versorgen. Die Fluss des Heißschmlezklebstoffs ist so dosiert, dass die auf der Papierbahn 7 aufgebrachte Heißschmelzklebstofflage nicht geschlossen ist, d.h. Öffnungen hat. Die beschriebene Schlitzdüse 17 ermöglicht einen streifenförmigen Auftrag des Heißschmelzklebstoffs auf die Papierbahn 7. Dabei ist jedem der Schlitzdüsenabschnitte 18a, 18b ein aufzutragender Streifen der Breite des zugehörigen Abschnitts 18a, 18b zugeordnet. In Fig. 5 läuft die Papierbahn 7 senkrecht zur Zeichenebene unter der Schlitzdüse 17 entlang. Die Streifen bilden sich folglich entlang der Papierbahn 7 auch senkrecht zur Zeichenebene aus.

## Patentansprüche

1. Behältnis (1), insbesondere Sack zum Verpacken von Schüttgut wie etwa Zement, mit
- mindestens einer das Behältnis (1) im wesentlichen ausbildenden, gasdurchlässigen und feuchtigkeitsabweisenden Behältniswandung (2),
- die eine Trägerlage (3) und
- eine Öffnungen aufweisende Kunststofflage (4) aufweist,
**dadurch gekennzeichnet, dass** die Kunststofflage (4) eine Klebstofflage, insbesondere eine Heißschmelzklebstofflage, ist.

2. Behältnis nach Anspruch 1,
**dadurch gekennzeichnet, dass** die Kunststofflage (4) außen auf der Trägerlage (3) angeordnet ist.

3. Behältnis nach Anspruch 1 oder 2,
**dadurch gekennzeichnet, dass** außen auf der Kunststofflage (4) eine weitere Trägerlage aufgebracht ist.

4. Behältnis nach Anspruch 1, 2 oder 3,
**dadurch gekennzeichnet, dass** die Trägerlage (3) eine Gewebelage oder Papierlage ist.

5. Behältnis nach wenigstens einem der vorstehenden Ansprüche,
**dadurch gekennzeichnet, dass** die Kunststofflage (4) voneinander beabstandete Heißschmelzklebstoffstreifen aufweist.

6. Behältnis nach wenigstens einem der vorstehenden Ansprüche,
**dadurch gekennzeichnet, dass** die Kunststofflage (4) porös ist.

7. Vorrichtung zur Herstellung von Behältnissen (1), insbesondere Säcken zum Verpacken von Schüttgut wie Zement, mit:
- einem Schneidwerkzeug (15) zum Schneiden einer Trägerbahn (7) in Abschnitte (16) und
- einem Ausformungswerkzeug zur Ausformung eines Behältnisses (1) aus jeweils einem der Abschnitte (16), **gekennzeichnet durch**
- mindestens ein Beschichtungswerkzeug (9) zum Auftragen einer Öffnungen aufweisenden Kunststofflage (13) auf die Trägerbahn (7), und
- mindestens einem Transportwerkzeug (8) zum Transport der Trägerbahn (7) vorbei an dem mindestens einen Beschichtungswerkzeug (9),
**dadurch gekennzeichnet, dass** das mindestens eine Beschichtungswerkzeug einen Fluidapplikator (9) mit einer trägerbahnseitig angeordneten Schlitzdüse (17) zum Auftragen flüssigen Kunststoffs aufweist, welcher vorzugsweise vor dem Schneidwerkzeug (15) in Transportrichtung angeordnet ist.

8. Vorrichtung nach Anspruch 7,
**dadurch gekennzeichnet, dass** die Schlitzdüse (17) in Schlitzdüsenabschnitte (18a, 18b) unterteilt ist, und die Schlitzdüsenabschnitte (18a, 18b) durch einzelne oder Gruppen von Schlitzdüsenabschnitten (18a, 18b) zugeordneten Pumpen (10), die mittels einer Steuereinrichtung (22) steuerbar sind, mit flüssigem Kunststoff versorgbar sind.

9. Vorrichtung nach Anspruch 7,
**dadurch gekennzeichnet, dass** das mindestens eine Beschichtungswerkzeug (9) mindestens ein Streuwerkzeug zum Aufstreuen von Kunststoffpulver auf die Trägerbahn (7) und in Transportrichtung der Trägerbahn (7) nach dem mindestens einen Streuwerkzeug wenigstens ein Heizelement (14) zum Schmelzen des Kunststoffpulvers und zum Ausbilden einer porösen Kunststoffschicht aufweist.

10. Vorrichtung nach wenigstens einem der Ansprüche 7 bis 9,
**dadurch gekennzeichnet, dass** in Transportrichtung nach dem mindestens einen Beschichtungswerkzeug (4) Laminierrollen zum Aufbringen einer weiteren Trägerbahn auf die Kunststoffseite der beschichteten Trägerbahn (7) angeordnet sind.

11. Verfahren zur Herstellung von Behältnissen, insbesondere Säcken, zum Verpacken von Schüttgut wie Zement, in dem:
- eine Trägerbahn (7) in Abschnitte zerschnitten wird und
- jeder Abschnitt (16) zu jeweils einer ein Behältnis (1) im wesentlichen ausbildenden, einer Behältniswandung (2) geformt wird,
**dadurch gekennzeichnet, dass**
- die Trägerbahn (7) mit einer Öffnungen aufweisenden Kunststafflage (13), die eine Klebstofflage insbesondere Heißschmelzklebstofflage ist, beschichtet wird, um eine luftdurchlässige und feuchtigkeitsabweisende Behältniswandung (2) auszuformen.

12. Verfahren nach Anspruch 11,
**dadurch gekennzeichnet, dass** eine weitere Trägerlage auf die Kunststofflage (13) aufgebracht wird.

13. Verfahren zum Befüllen von Behältnissen (1), insbesondere Säcken mit Schüttgut wie Zement, in dem:
- das Schüttgut, insbesondere Zement, in das offene Behältnis (1) mittels eines Einfüllstutzens gefüllt wird und
- das Behältnis (1) gegenüber dem Einfüllstutzen abgedichtet wird,
**dadurch gekennzeichnet, dass**
- in dem Behältnis (1) eingeschlossene Luft während des Füllens durch mindestens eine gasdurchlässige und feuchtigkeitsabeisende Behältniswandung (2) des Behältnisses (1) entweicht, wobei die Behältniswandung eine Klebstofflage, insbesondere Heißschmelzklebstofflage aufweist.

## Claims

1. A container (1), in particular a sack for packing bulk material such as cement, having
- at least one gas-permeable and moisture-repellent container wall (2) which substantially forms the container (1),
- which has a support layer (3) and
- which has a synthetic layer (4) having openings,
**characterised in that** the synthetic layer (4) is an adhesive layer, in particular a hot-melt adhesive layer.

2. A container according to Claim 1, **characterised in that** the synthetic layer (4) is arranged externally, on the support layer (3).

3. A container according to Claim 1 or 2, **characterised in that** a further support layer is provided externally, on the synthetic layer (4).

4. A container according to Claim 1, 2 or 3, **characterised in that** the support layer (3) is a fabric layer or paper layer.

5. A container according to at least one of the preceding claims, **characterised in that** the synthetic layer (4) has mutually spaced hot-melt adhesive strips.

6. A container according to at least one of the preceding claims, **characterised in that** the synthetic layer (4) is porous.

7. A device for making containers (1), in particular sacks for packing bulk material such as cement, having:
- a cutting tool (15) for cutting a support web (7) into sections (16), and
- a shaping tool for shaping a respective container (1) from each of the portions (16), **characterised by**
- at least one coating tool (9) for applying a synthetic layer (13) having openings to the support web (7), and
- at least one transporting tool (8) for transporting the support web (7) past the at least one coating tool (9),
**characterised in that** the at least one coating tool has a fluid applicator (9) having a slotted die (17) which is arranged on the support web side and is for applying liquid synthetic material, this fluid applicator (9) preferably being arranged upstream of the cutting tool (15) in the direction of transport.

8. A device according to Claim 7, **characterised in that** the slotted die (17) is divided into slotted die sections (18a, 18b), and the slotted die sections (18a, 18b) may be supplied with liquid synthetic material by individual pumps (10) or groups thereof which are associated with slotted die sections (18a, 18b) and are controllable by means of a control device (22).

9. A device according to Claim 7, **characterised in that** the at least one coating tool (9) has at least one sprinkling tool for sprinkling synthetic powder onto the support web (7), and at least one heating element (14) for melting the synthetic powder and for creating a porous synthetic layer, which is downstream of the at least one sprinkling tool in the direction of transport of the support web (7).

10. A device according to at least one of Claims 7 to 9, **characterised in that** laminating rolls for applying a further support web to the synthetic side of the coated support web (7) are arranged downstream of the at least one coating tool (4) in the direction of transport.

11. A method for making containers, in particular sacks, for packing bulk material such as cement, in which:
- a support web (7) is cut into sections, and
- each of the portions (16) is shaped into a respective container wall (2) substantially forming a container (1),
**characterised in that**
- the support web (7) is coated with a synthetic layer (13) having openings, which is an adhesive layer, in particular a hot-melt adhesive layer, in order to shape therefrom an air-permeable and moisture-repellent container wall (2).

12. A method according to Claim 11, **characterised in that** a further support layer is applied to the synthetic layer (13).

13. A method for filling containers (1), in particular sacks, with bulk material such as cement, in which:
- the bulk material, in particular cement, is put into the open container (1) by means of a filling nozzle, and
- the container (1) is sealed off from the filling nozzle,
**characterised in that**
- air enclosed in the container (1) escapes during filling through at least one gas-permeable and moisture-repellent container wall (2) of the container (1), with the container wall having an adhesive layer, in particular a hot-melt adhesive layer.

## Revendications

1. Récipient (1), plus particulièrement sac pour l'emballage de produit en vrac comme du ciment, **caractérisé par**
- au moins une paroi de récipient (2) perméable aux gaz et hydrofuge constituant l'essentiel du récipient (1)
- une couche support (3) et
- une couche de matière plastique (4) comportant des ouvertures,
**caractérisé en ce que** la couche de matière plastique est une couche d'adhésif, plus particulièrement une couche d'adhésif fusible.

2. Récipient selon la revendication 1, **caractérisé en ce que** la couche de matière plastique (4) se trouve à l'extérieur de la couche support (3).

3. Récipient selon la revendication 1 ou 2, **caractérisé en ce qu'**une autre couche support est appliquée à l'extérieur sur la couche de matière plastique (4).

4. Récipient selon la revendication 1, 2 ou 3, **caractérisé en ce que** la couche support (3) est une couche de tissu ou une couche de papier.

5. Récipient selon au moins l'une des revendications précédentes, **caractérisé en ce que** la couche de matière plastique (4) comporte des bandes d'adhésif fusible distantes entres elles.

6. Récipient selon au moins l'une des revendications précédentes, **caractérisé en ce que** la couche de matière plastique (4) est poreuse.

7. Dispositif de fabrication de récipients (1), plus particulièrement de sacs pour l'emballage d'un produit en vrac comme du ciment avec
- un outil de coupe (15) pour la découpe d'une bande support (7) en segments (16) et
- un outil de façonnage pour le façonnage d'un récipient (1) à partir d'un des segments (16) **caractérisé par**
- au moins un outil de revêtement (9) pour l'application d'une couche de matière plastique (13) comportant des ouvertures sur la bande support (7) et .
- au moins un outil de transport (8) pour le transport de la bande support (7) vers au moins un outil de revêtement (9)
**caractérisé en ce que** l'outil de revêtement comporte un applicateur de fluide (9) avec une buse fendue (17) disposée du côté de la bande support, pour l'application d'une matière plastique liquide, qui se trouve, de préférence, avant l'outil de coupe (15) dans le sens du transport.

8. Dispositif selon la revendication 7, **caractérisé en ce que** la buse fendue (17) est divisée en sections de buse fendue 18a, 18b) et les sections de la buse fendue (18a, 18b) peuvent être alimentées en matière plastique liquide par des pompes (10), correspondant à des sections individuelles ou à des groupes de sections de buse fendue (18a, 18b) et pouvant être contrôlées à l'aide d'un dispositif de contrôle (22).

9. Dispositif selon la revendication 7, **caractérisé en ce que** l'outil de revêtement (9) comporte au moins un outil de pulvérisation pour pulvériser une poudre de matière plastique sur la bande support (7) et, après l'outil de pulvérisation dans le sens de transport de la bande support (7), au moins un élément de chauffage (14) pour faire fondre la poudre de matière plastique et pour former une couche de matière plastique poreuse.

10. Dispositif selon au moins l'une des revendications 7 à 9, **caractérisé en ce qu'**après l'outil de revêtement (9) dans le sens du transport, se trouvent des rouleaux de laminage pour l'application d'une autre bande support du côté de matière plastique de la bande support (7) revêtue.

11. Procédé de fabrication de récipients, plus particulièrement de sacs pour l'emballage d'un produit en vrac comme du ciment dans lequel :
- une bande support (7) est découpée et segments et
- chaque segment (16) est transformé en une paroi de récipient (2) constituant l'essentiel d'un récipient (1),
**caractérisé en ce que**
- la bande support (7) est revêtue d'une couche de matière plastique (13) comportant des ouvertures afin de former une paroi de récipient (2) perméable à l'air et hydrofuge.

12. Procédé selon la revendication 11, **caractérisé en ce qu'**une autre couche support est appliquée sur la couche de matière plastique (13).

13. Procédé de remplissage de récipients (1) plus particulièrement de sacs, avec un produit en vrac comme du ciment dans lequel :
- le produit en vrac, plus particulièrement le ciment, est déversé dans le récipient (1) ouvert à l'aide d'un manchon de remplissage et
- le récipient (1) est étanchéifié par rapport au manchon de remplissage,
**caractérisé en ce que**
- l'air enfermé dans le récipient (1) s'échappe à travers au moins une paroi (2) perméable à l'air et hydrofuge du récipient (1), dans lequel la paroi du récipient comprend une couche d'adhésif, plus particulièrement une couche d'adhésif fusible.
